# EUROPEAN PATENT SPECIFICATION

(11) **EP 0 884 905 B1**
(45) Date of publication and mention of the grant of the patent: **08.09.2004**
(21) Application number: 98660041.9
(22) Date of filing: 13.05.1998
(51) Int. Cl.: H04N 7/14

(54) **A method for producing an image to be transmitted from a terminal and the terminal**
Verfahren und Gerät zur Bearbeitung eines Bildes vor der Übertragung von einem Endgerät
Méthode et appareil de traitement d'une image pour la transmission d'un terminal

(30) Priority: 13.06.1997 FI 972509
(43) Date of publication of application: 16.12.1998
(73) Proprietor: Nokia Corporation, 02150 Espoo (FI)
(72) Inventor: Leppisaari, Arto, 33100 Tampere (FI); Leskinen, Tom, 33610 Tampere (FI)
(74) Representative: Heikkinen, Esko Juhani

(56) References cited:
- EP-A- 0 735 757
- DE-A- 4 238 743
- US-A- 5 414 444
- US-A- 5 485 504
- PATENT ABSTRACTS OF JAPAN vol. 018, no. 205 (E-1536), 12 April 1994 (1994-04-12) & JP 06 006800 A (MATSUSHITA ELECTRIC IND CO LTD), 14 January 1994 (1994-01-14)

## Description

### OBJECT OF THE INVENTION

The present invention relates to a method and a terminal for producing an image, to be transmitted, in the terminal wherein a picture of a user of the terminal is recorded and an image, intended for further transmission, is produced from the recorded image field and further transmitted to a receiver. The invention relates particularly to the focusing of a video camera or a still camera on the user of a portable image phone using radio communication.

### BACKGROUND OF THE INVENTION

The next major step for wireless communication will probably be the transfer of a moving video image. However, due to the insufficient transmission capacity of wireless telecommunication networks and the undeveloped state of video image coding technique, present technology does not yet enable to use of these kinds of portable terminals. When studying the requirements set on a terminal capable of processing a video image, certain new problems become apparent. A problematic situation occurs when using a portable videophone that shoots the face of a user from the front while the user is holding the device in his hand. In this case, the problem is the focusing of the camera, located within the image phone, on the object to be recorded, typically, on the user's face. When the user is holding the image phone in his hand, it is very likely that, due to the movements of his hand and head, it is very difficult to record the object. The changes in the image caused by the movements of the camera present another problem, because when the camera is moving the entire image changes as far as the video codec is concemed, whereupon even effective image coding is unable to maintain satisfactory image quality at the relatively low communication speeds available in wireless communication.

Solutions have been looked for conceming the problems presented above. One of them is to also display, on the display of a portable videophone, the image taken by the local camera. However, this solution is poorly adapted for use in connection with portable terminals, because the size of the display is limited and, in addition, as regards the processing power required of the terminal, it is not profitable to display, on one's own display, an image to be transmitted (as image data). The additional image restricts the display area available for the display of a received image and it increases the power consumption of the terminal. This is extremely inconvenient typically in connection with battery-operated terminals, the operating time of which is reduced.

In addition, a solution suitable for use in connection with fixed video conference equipment is presented, as known prior art, wherein a camera is focused using a transmitter to be attached on the object to be recorded, which is followed by a video camera installed on top of a video monitor or a projection monitor, typically large in size. This solution enables, e.g., the automatic monitoring of a teacher, moving in front of the class, in connection with tele-education to be implemented by means of video conference equipment. The equipment is supplied, at least, by Parker Vision, an American company whose product has the registered name of CameraMan. The implementation of the equipment has been described in more detail, e.g., in Patent Publication US 5,179,421.

### SHORT SUMMARY OF THE INVENTION

A method and a terminal have now been invented for producing an image to be transmitted as image data, by means of which it is ensured that the user of the terminal can be seen in the image represented by the image data to be transmitted by selecting the required section of the image field recorded by a camera or by focusing the camera. The invention will enhance the transmission of a correctly aligned image even when the camera has not been properly focused or the position between the terminal and its user changes, e.g., when the user's hands move. It is easy to notice, in connection with the presented embodiments, that several problems relating to known prior art can be mitigated.
In the method, according to the invention, the user of the terminal is recorded or photographed (i.e. a representation of the user is recorded) for producing an image, to be transmitted as image data, in the terminal and an image, to be further transmitted as image data, is produced from the videoed or photographed image field. The invention utilises pattern recognition. The user's figure is identified in the recorded image field by comparing the contents of the recorded image field with the figure pre-stored in a memory of the terminal or it is possible to identify the figure, e.g., by means of a thermograph. After identifying the figure (e.g., a figure formed by the user's head and shoulders, a full-length portrait or some other figure that needs to be identified), the location of the figure in the recorded image field is determined. When the location of the figure in the image field is known, the focusing of the image, for example, on the user's face can be implemented in a number of ways.

If a video or still camera, equipped with a wide-angle lens, is used in connection with the terminal according to the present invention, it is possible to determine, e.g., the location of the user's head and shoulders in the wide sector, recorded by the camera, by means of pattern recognition. On the basis of this information, the required section can be selected from the recorded image field by means of digital signal processing, e.g., an image field that covers just the head and shoulders. If necessary, the image field can also be adjusted whereupon, e.g., only the user's face or the whole-length portrait of the user can be displayed of the image field. The image field can be adjusted by the user of the terminal according to the invention or, altematively, by the opposite end in a remote-controlled manner through a separate data channel commonly included in a telecommunication connection. Instead of the user of the terminal, it is also possible to identify other things by means of pattern recognition, e.g., figures of different types of objects that you want the camera to follow. Thus, it is possible to apply the invention, e.g., to remote controlling, whereupon it is possible to search in the image, e.g., for figures of cars or people and to focus the image, to be transmitted as image data from the terminal, closer on them.

If no wide-angle lens is available, it is possible to focus the camera of the terminal at an object, determined by means of pattern recognition, by turning the camera mechanically, e.g., by means of small electric motors. If the portable terminal is extremely small in size, the use of electric motors is not necessarily the best solution. In this case, it is possible to leave the camera for the user of the terminal to focus, and guide the user to turn the terminal in the right direction, e.g., with the help of signal lights, such as four arrow-like LEDs, to be installed in the terminal. Altematively, it is possible to guide the user by means of characters to be written out on the display (e.g., a liquid crystal display) of the terminal.

The invention is characterised in what has been presented in the characterising parts of claims 1 and 4.

### PRESENTATION OF FIGURES USED IN THE SPECIFICATION

- Figures 1A and 1B: illustrate the selection of an image field, to be transmitted, on the basis of pattern recognition in an embodiment of a terminal according to the invention,
- Figure 2: illustrates the focusing of a camera on the basis of figure identification in another embodiment of a terminal according to the invention,
- Figure 3: illustrates an embodiment of a terminal according to the invention,
- Figure 4: illustrates another embodiment of a terminal, according to the invention, while being used,
- Figure 5: illustrates a third embodiment of a terminal according to the invention, and
- Figures 6A, 6B and 6C: illustrate structural parts of the different embodiments of a terminal, according to the invention, in the form of block diagrams.

### DETAILED DESCRIPTION OF THE INVENTION

Next, the invention will be discussed in detail using certain embodiments of the terminal according to the invention as examples, wherein the image to be transmitted as image data is selected from the image field recorded by a wide-angle camera or the camera of a portable terminal is focused on the face and upper body of the user of the terminal. In these exemplary embodiments, pattem recognition is used for focusing.

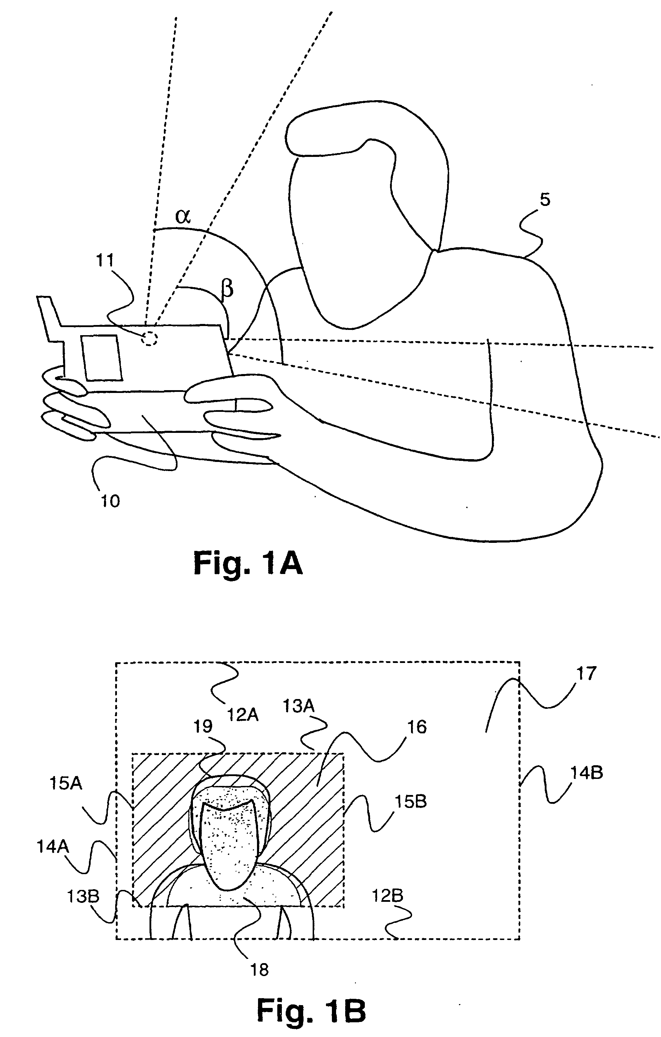

Figure 1A illustrates a situation where a camera 11, installed in a terminal according to the invention, in this case, a portable mobile station 10, takes a picture of a user 5 of the terminal. In this embodiment of the present invention, the image field (Reference β) is selected from the wide image field (Reference α), recorded by the camera 11, which comprises the head and the upper part of the shoulders of the user (5). The camera 11 used is equipped with a wide-angle lens (not illustrated in the figure), so that the user 5 fits in the camera's image field even if the terminal 10 were out of line in relation to the user 5. In Figure 1B, a wide image field 17 has been illustrated by dotted lines 12A, 12B, 14A and 14B. If a focused image field 16 was not selected from the wide image field 17, recorded by the camera 11, using the method according to the invention, a very small upper body image 19 of the user 5 would be shown at the bottom of the large image field 17, on the left-hand side.

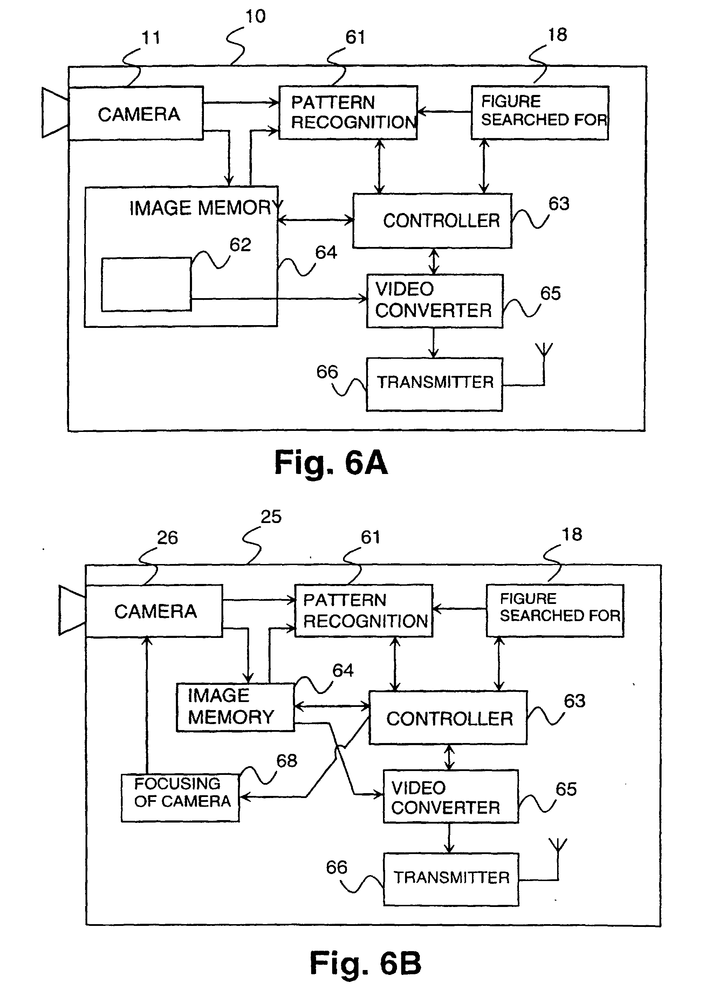

The terminal 10, according to the invention, is equipped with pattem recognition means (Reference 61, Figure 6A), which have been arranged to search for a figure 18, having a pre-determined shape (marked in grey in Figure 1B), in the large image field 17, recorded by the camera 11, in a manner known as such. When the area in the large image field 17 that sufficiently corresponds with the head and upper body of the user 5 is located, the terminal better adjusts the focusing of the camera 11 on the face of the user 5. In this particular embodiment, this is implemented so that the terminal 10, according to the invention, is equipped with a sufficiently large memory space 64 (Figure 6A), wherein the entire large image field 17, recorded by the camera 11, is stored. After this, a required sub-section 62 (corresponds with the image field 16 in Figure 1B) of the section of the large image field 17, where pattern recognition means 61 located the area in the image that corresponds with the pre-determined figure 18, is determined in the memory space 64, controlled by a controller 63. This new section 16 of the image field 17, from which the video signal to be transmitted is produced, has been presented in Figure 1B by dotted lines 13A and 13B, 15A and 15B. The video signal to be transmitted is produced, controlled by the controller 63, by a video converter 65 which retrieves from the memory space 64, on the basis of the instructions it has received from the controller, the video data contained by the required sub-section 62, converts it into a form suitable for a transmitter 66 (e.g., into a digital format according to standard H.261, H.263 or MPEG4 known to a person skilled in the art) and further transmits it to the transmitter 66. This embodiment of the terminal, according to the invention, is the portable mobile station 10, so the transmitter 66 contains the parts of the transmission branch of a mobile station, known to a person skilled in the art, for transmitting a coded video signal through a mobile communication network to a receiving terminal (not illustrated in the figure). The receiving terminal can be a corresponding type of portable mobile station 10, but it can just as well be a terminal, e.g., video conference equipment in contact with a wired telephone network.

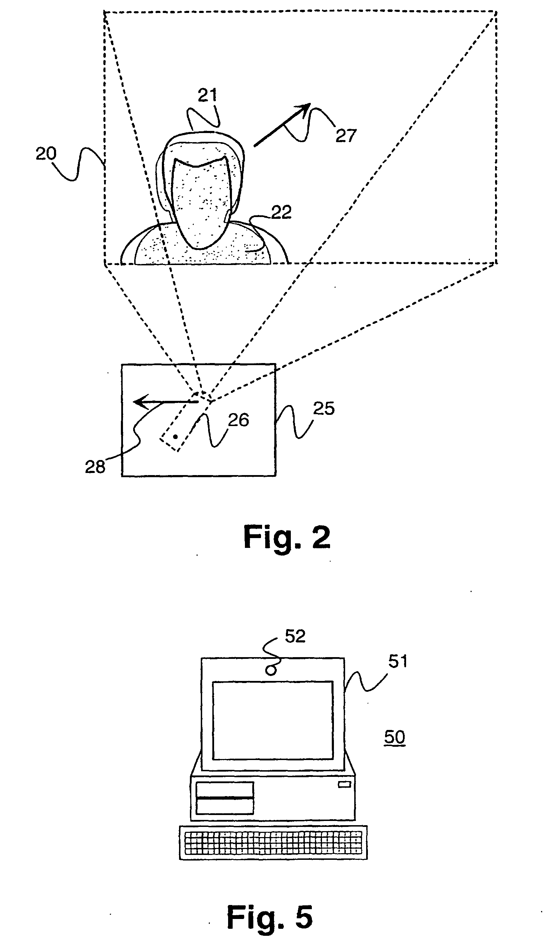

Figure 2 illustrates the focusing of a camera, on the basis of pattern recognition, in another embodiment of a terminal 25 according to the invention. Figure 6B illustrates functional blocks of this embodiment. Those functional blocks that have the same function as in the embodiment illustrated in Figure 1, have been referred to by the same numbers. The difference is mainly a camera focusing block 68, controlled by the controller 63, necessary for focusing the camera. In this embodiment, the terminal 25, according to the invention, is equipped with a camera 26, having a normal lens, and an image field 20, recorded by the camera, is transmitted to a receiving terminal in whole. In this respect, this solution is simpler and cheaper to implement than the embodiment presented in connection with Figures 1A, 1B and 6A. In this embodiment, pattern recognition is implemented according to the same principle (Figure 6B, Block 61). The terminal 25 searches, in the image field 20, for the area in the image that corresponds with a pre-determined figure 22, i.e., a figure 21 of the user 5 of the terminal. When it is located, the terminal determines the difference of the located area from the centre of the image field 20. If the figure 21 of the user 5 is located at the bottom of the image, on the left-hand side, as is shown in the example illustrated in Figure 2, the terminal 25 adjusts the camera 26, installed therein, in the required direction so that the figure 21 of the user 5 settles in the centre of the image field 20 which, in this exemplary case, means in the direction of an arrow 27. To accomplish this, the terminal 25 is equipped, e.g., with small electric motors and control means (Reference 68, Figure 6B), such as servos, known to a person skilled in the art, that adjust the focusing of the camera 26. A servo, controlled by the controller 63 of the terminal 25, tums the camera 26 in the direction of an arrow 28, whereupon the figure 21 of the user 5 moves closer to the centre. The focusing of the camera 26 in the vertical and horizontal direction is implemented according to the same principle. When the camera has been focused in both a vertical and horizontal direction, the figure 21 of the user 5 settles in the centre of the image field and the image is as pleasant as possible from the receiver's viewpoint.

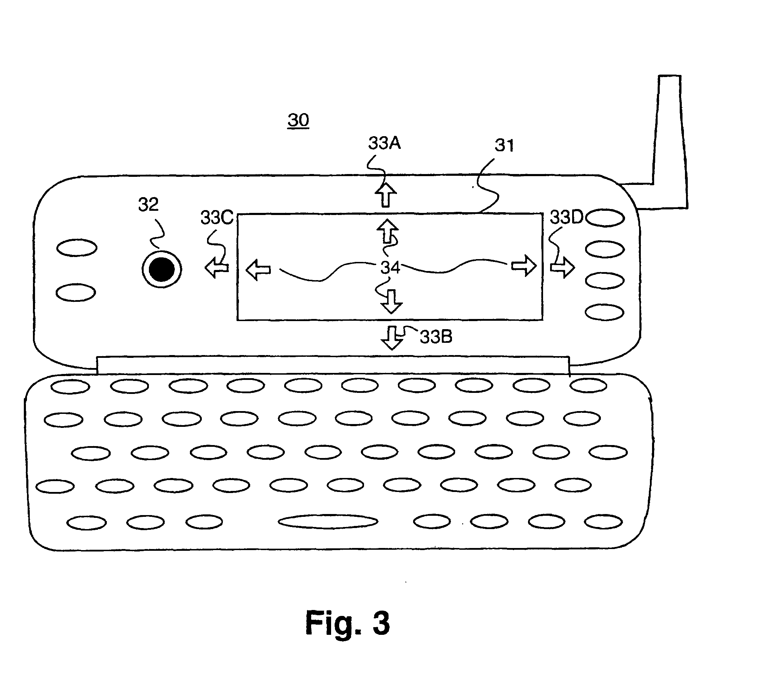

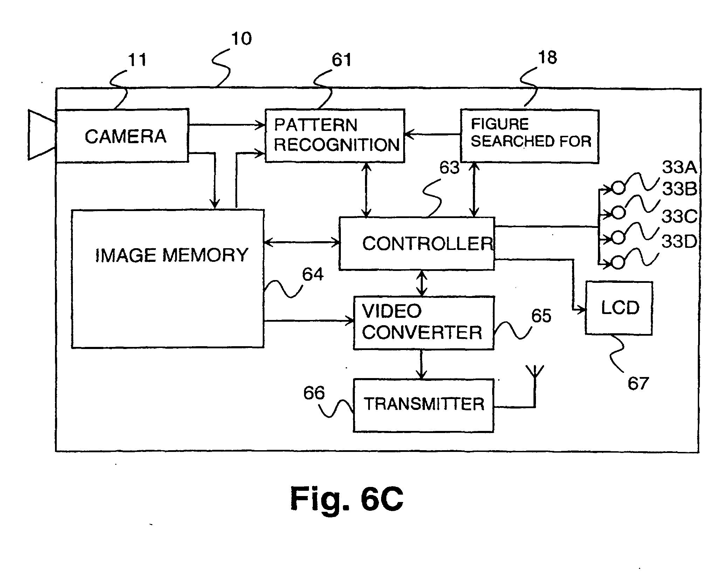

Figure 3 illustrates another exemplary embodiment of the terminal according to the invention. Contrary to the embodiment illustrated in Figure 2, it is equipped with a camera 32 fixed in relation to a terminal 30. Thus, it is not possible to focus the camera automatically in the manner presented in connection with Figure 2 but, instead, this structural solution is suited for applications such as the embodiment illustrated in Figures 1A and 1B. In connection with the terminal 30, illustrated in Figure 3, the user 5 of the terminal assists in the focusing of the camera. This follows that the system operation is not fully automatic but, correspondingly, the structure of the embodiment 30, illustrated in Figure 3, is very compact and economical to implement. Hence, it is extremely suitable especially for portable mobile stations, suitable for video image transmission, that operate through a mobile communication network, i.e., for portable image phones small in size. For example, the pattern recognition method presented above is used for focusing the camera. Because the camera directing means, presented in connection with Figure 2, are unavailable, the information on the camera's incorrect position is transmitted to the user of the terminal 30, who himself focuss the terminal 30 in the correct direction by turning the device with his hands. The indication of the direction in which the camera should be turned is transmitted, e.g., by means of indicators, such as arrow-shaped LEDs 33A, 33B, 33C and 33D, illustrated in Figure 3, to be installed on the margins of a display 31 of the terminal 30. Alternatively, it is also possible to place the indicators on the display of the terminal 30 itself, e.g., on a liquid crystal display, as indicated by Reference 34. In the smallest and simplest terminals, according to the present invention, the indicators mentioned above can be replaced by a single indicator which indicates whether or not the camera is in the correct position. The controller 63 serves to control the LEDS 33A, 33B, 33C and 33D or the LCD 67 on the basis of the results it has received from the pattem recognition block 61. Figure 6C illustrates the structure of the terminal 30 by means of functional blocks.

Methods for producing an image to be transmitted as image data, according to the invention, were presented in connection with Figures 1A, 1B, 2 and 3, the methods being based on the pattern recognition of the image stored in the memory 64 as image data. Another way to implement pattem recognition is to use, e.g., a thermograph. In this case, it is also possible to focus the camera both automatically, as in the embodiments of the invention presented in connection with Figures 1A, 1B and 2, and assisted by the user of the terminal, as in the example presented in connection with Figure 3.

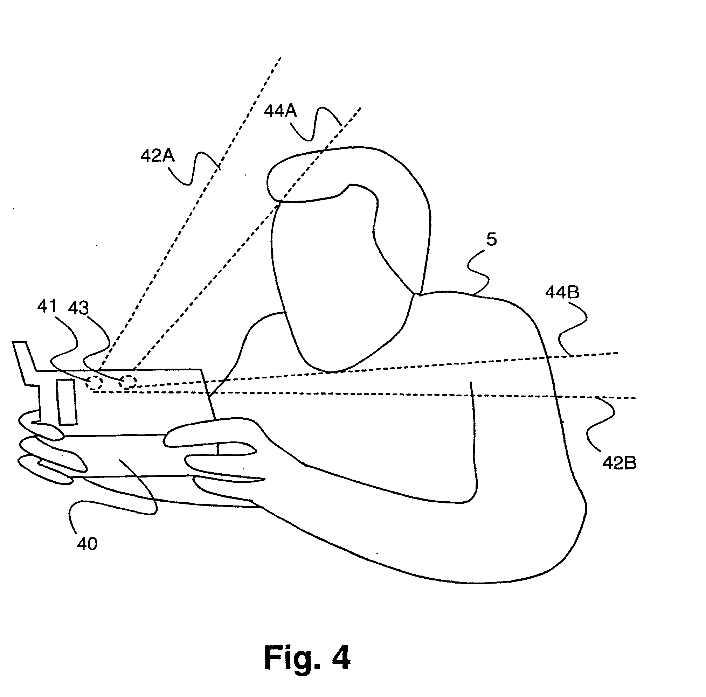

Figure 4 illustrates a terminal 40, according to the invention, wherein a camera 41 has been focused using a thermograph 43. When the terminal 40 is switched on both the video camera 41 and the thermograph 43 are activated. A temperature detection logic implemented in the terminal 40, known as such to a person skilled in the art, searches for the warmest section in the image field of the thermograph which, in most of the terminal's normal operating conditions, is located by the face of the user. This has been illustrated by dotted lines 44A and 44B. In more advanced systems, it is possible to identify, in the image field of the thermograph 43, an isothermal section in the shape of a face. This arrangement prevents interference caused by individual heat sources, located in the background of the image, and also provides for the system to operate in conditions where the temperature of the operating environment is close to the temperature of the face. When the area searched for has been located, an image field 42A and 42B, recorded by the video camera 41, is focused on the area around the face to the required tolerance. If the thermograph 43 does not locate the place of the face reliably, the video camera 41 is adjusted to the centre position to ensure basic operation. If the terminal 40 is not equipped with the camera focusing methods illustrated in Figure 1A, 1B or 2, the user can be guided to turn the terminal and, at the same time, the fixed camera with the help of the indication characters 33A-33D or 34 as presented in connection with Figure 3. Thus, a thermograph can be used in connection with the embodiments presented above in Figures 1A, 1B, 2 and 3.

The use of the invention was described above in connection with the portable terminals 10, 25, 30 and 40, for which it is particularly well suited, because interference caused in the image to be transmitted as image data by the movement of the hands and the head can be essentially mitigated by aligning the camera towards the face or upper body of the user of the terminal. The image quality also improves owing to the fact that as the focusing of the image remains better unchanged, as regards an image codec, the number of changes taking place in the image decreases considerably. Instead of the improvement of the image quality achieved, it is possible to transmit by means of the method for producing an image to be transmitted, according to the invention, good quality images at a lower transmission speed. However, there is nothing to prevent the invention from also being applied in connection with fixed terminals designed for office or home use. Figure 5 illustrates a terminal 50, based on computer hardware, which comprises a so-called multimedia monitor 51 equipped with a camera 52. All the methods, according to the invention, presented above in connection with Figures 1A, 1B, 2, 3 and 4, can be used to process the image data of the camera 52 or to focus the camera 52.

The implementation and embodiments of the present invention have been presented with the help of examples. It is obvious to a person skilled in the art that the present invention is not restricted to details of the embodiments presented above, and that the invention can also be implemented in another form without deviating from the characteristics of the invention. The embodiments presented above should be considered illustrative, but not restricting. Thus, the possibilities of implementing and using the invention are only restricted by the enclosed claims. Consequently, the various options of implementing the invention including the equivalent implementations, also belong to the scope of the invention as determined by the claims.

## Claims

1. A method for producing, in a terminal (10, 25, 30, 40, 50), an image to be transmitted as image data, wherein
- an image field (17, 20), comprising a representation of a user (5) of the terminal (10, 25, 30, 40, 50), is recorded and an image (16, 20), intended for further transmission as image data, is produced from the recorded image field (17, 20) as a response to recording,
**characterised in that**
- a figure (19, 21) of the user (5) is identified in the recorded image field (17, 20),
- the location of the figure (19, 21) in the image field (17, 20) is determined on the basis of the identified figure (19, 21) of the user (5), and
- on the basis of the determined location, adjustment data (33A, 33B, 33C, 33D, 34) is produced for marking off the figure (19, 21) of the user (5) into the image (16, 20) to be transmitted as image data.

2. A method according to claim 1, **characterised in that**
- the recorded image field (17, 20) is stored in an image memory (64),
- on the basis of the produced adjustment data (33A, 33B, 33C, 33D, 34), a section (62) including the figure (19, 21) of the user (5) of the terminal (10, 25, 30, 40, 50) is marked off the image memory (64),
- data included in the section (62) of the marked off image memory (64) is transferred to a video converter (65) for producing the image (16, 20) to be transmitted as image data.

3. A method according to claim 1, **characterised in that**
- said adjustment data (33A, 33B, 33C, 33D, 34) is transmitted to the user (5) of the terminal (10, 25, 30, 40, 50) by means of indication characters (33A, 33B, 33C, 33D, 34) for controlling the directing of the camera and for indicating the correct position.

4. A terminal (10, 25, 30, 40, 50), which comprises
- a camera (11, 26, 32, 41, 50) for recording an image field (17, 20) comprising a representation of the user (5) of the terminal (10, 25, 30, 40, 50) and for forming image data representing the recorded image field,
- coding means (62, 63, 64, 65) for coding the image data received from the camera (11, 26, 32, 41, 50), and
- transmission means (66) for transmitting (66) the coded image data to a receiver,
**characterised in that**
- in addition, it comprises pattern recognition means (18, 43, 61, 62, 63, 64) for identifying the figure (19, 21) of the user (5) of the terminal (10, 25, 30, 40, 50) and for determining the location in the recorded image field (17, 20), and
- adjustment data production means (18, 61, 62, 63, 64) for producing adjustment data (33A, 33B, 33C, 33D, 34) for marking off the figure (19, 21) of the user (5) into the image (16, 20) represented by the image data to be transmitted on the basis of the determined location.

5. A terminal (10, 25, 30, 40, 50) according to claim 4, **characterised in that** it comprises
- the image memory (64) for storing the image data included in the recorded image field (17, 20),
- image mark-off means (18, 61, 63) for marking off the section (62) of the image memory (64) containing the figure (19, 21) of the user (5) of the terminal (10, 25, 30, 40, 50) on the basis of the produced adjustment data (33A, 33B, 33C, 33D, 34),
- means (63) for transferring the data, included in the marked off section (62) of the image memory (64), to the video converter (65) in order to produce the image (16, 20) to be transmitted as image data.

6. A terminal (10, 25, 30, 40, 50) according to claim 4, **characterised in that** it comprises
- means (33A, 33B, 33C, 33D, 34) for transmitting the adjustment data (33A, 33B, 33C, 33D, 34) to the user (5) of the terminal (10, 25, 30, 40, 50) for focusing the terminal (10, 25, 30, 40, 50).

7. A terminal (10, 25, 30, 40, 50) according to claim 4, **characterised in that** said pattern recognition means (18, 43, 61, 62, 63, 64) comprises a thermograph (43).

8. A terminal (10, 25, 30, 40, 50) according to claim 4, **characterised in that** it comprises camera focusing means (68) for focusing the camera at the user (5) of the terminal (10, 25, 30, 40, 50) on the basis said adjustment data (33A, 33B, 33C, 33D, 34).

9. A terminal (10, 25, 30, 40, 50) according to claim 4, **characterised in that** it comprises a mobile station (10, 25, 30, 40, 50), intended to operate in a mobile communication network, for transmitting image data representing an image through the mobile communication network.

## Patentansprüche

1. Ein Verfahren zur Erzeugung eines als Bilddaten zu übertragenden Bildes in einem Terminal (10, 25, 30, 40, 50), wobei
- ein Bildfeld (17, 20), welches eine Darstellung eines Benutzers (5) des Terminals (10, 25, 30, 40, 50) umfasst, aufgezeichnet wird, und ein Bild (16, 20), welches zur weiteren Übertragung als Bilddaten gedacht ist, aufgrund des aufgezeichneten Bildfeldes (17, 20) in Antwort auf die Aufzeichnung erzeugt wird,
**dadurch gekennzeichnet, dass**
- eine Figur (19, 21) des Benutzers (5) im aufgezeichneten Bildfeld (17, 20) identifiziert wird,
- die Lage der Figur (19, 21) im Bildfeld (17, 20) aufgrund der identifizierten Figur (19, 21) des Benutzers (5) festgelegt wird, und
- aufgrund der festgelegten Lage Justierdaten (33A, 33B, 33C, 33D, 34) zum Abgrenzen der Figur (19, 21) des Benutzers (5) in dem als Bilddaten zu übertragenden Bild (16, 20) erzeugt werden.

2. Ein Verfahren nach Anspruch 1, **dadurch gekennzeichnet, dass**
- das aufgezeichnete Bildfeld (17, 20) in einem Bildspeicher (64) gespeichert wird,
- aufgrund der erzeugten Justierdaten (33A, 33B, 33C, 33D, 34) ein Abschnitt (62) einschließlich der Figur (19, 21) des Benutzers (5) des Terminals (10, 25, 30, 40, 50) im Bildspeicher (64) abgegrenzt wird,
- Daten, die im Abschnitt (62) des abgegrenzten Bildspeichers (64) enthalten sind, an einen Videowandler (65) übertragen werden, um das als Bilddaten zu übertragende Bild (16, 20) zu erzeugen.

3. Ein Verfahren nach Anspruch 1, **dadurch gekennzeichnet, dass**
- die Justierdaten (33A, 33B, 33C, 33D, 34) an den Benutzer (5) des Terminals (10, 25, 30, 40, 50) mittels Anzeigezeichen (33A, 33B, 33C, 33D, 34) übertragen werden, um die Lenkung der Kamera zu steuern, und um die korrekte Position anzuzeigen.

4. Ein Terminal (10, 25, 30, 40, 50) welches umfasst:
- eine Kamera (11, 26, 32, 41, 50) zum Aufzeichnen eines Bildfeldes (17, 20), welches eine Darstellung des Benutzers (5) des Terminals (10, 25, 30, 40, 50) umfasst, und zum Erstellen von Bilddaten, die das aufgezeichnete Bildfeld darstellen,
- Codiermittel (62, 63, 64, 65) zum Codieren der von der Kamera (11, 26, 32, 41, 50) empfangenen Bilddaten, und
- Übertragungsmittel (66) zum Übertragen (66) der codierten Bilddaten an einen Empfänger,
**dadurch gekennzeichnet, dass**
- es zusätzlich Mustererkennungsmittel (18, 43, 61, 62, 63, 64) zum Identifizieren der Figur (19, 21) des Benutzers (5) des Terminals (10, 25, 30, 40, 50) und zum Festlegen der Lage in dem aufgezeichneten Bildfeld (17, 20), und
- Justierdatenerzeugungsmittel (18, 61, 62, 63, 64) zur Erzeugung von Justierdaten (33A, 33B, 33C, 33D, 34) zum Abgrenzen der Figur (19, 21) des Benutzers (5) im Bild (16, 20) umfasst, wobei das Bild durch die Bilddaten dargestellt ist, die aufgrund der festgelegten Lage zu übertragen sind.

5. Ein Terminal (10, 25, 30, 40, 50) nach Anspruch 4, **dadurch gekennzeichnet, dass** es umfasst:
- einen Bildspeicher (64) zum Speichern der im aufgezeichneten Bildfeld (17, 20) enthaltenen Bilddaten,
- Bildabgrenzungsmittel (18, 61, 63) zum Abgrenzen des Abschnitts (62) des Bildspeichers (64), der die Figur (19, 21) des Benutzers (5) des Terminals (10, 25, 30, 40, 50) aufgrund der erzeugten Justierdaten (33A, 33B, 33C, 33D, 34) enthält,
- Mittel (63) zum Übertragen der in dem abgegrenzten Abschnitt (62) des Bildspeichers (64) enthaltenen Daten an den Videowandler (65), um das als Bilddaten zu übertragende Bild (16, 20) zu erzeugen.

6. Ein Terminal (10, 25, 30, 40, 50) nach Anspruch 4, **dadurch gekennzeichnet, dass** es umfasst:
- Mittel ((33A, 33B, 33C, 33D, 34) zum Übertragen der Justierdaten (33A, 33B, 33C, 33D, 34) an den Benutzer (5) des Terminals (10, 25, 30, 40, 50) zum Einstellen des Terminals (10, 25, 30, 40, 50).

7. Ein Terminal (10, 25, 30, 40, 50) nach Anspruch 4, **dadurch gekennzeichnet, dass** die Mustererkennungsmittel (18, 43, 61, 62, 63, 64) einen Temperaturschreiber (43) umfassen.

8. Ein Terminal (10, 25, 30, 40, 50) nach Anspruch 4, **dadurch gekennzeichnet, dass** es Kameraeinstellungsmittel (68) zum Einstellen der Kamera auf den Benutzer (5) des Terminals (10, 25, 30, 40, 50) aufgrund der Justierdaten (33A, 33B, 33C, 33D, 34) umfasst.

9. Ein Terminal (10, 25, 30, 40, 50) nach Anspruch 4, **dadurch gekennzeichnet, dass** es eine Mobilstation (10, 25, 30, 40, 50) umfasst, die dazu bestimmt ist, in einem mobilen Kommunikationsnetzwerk betrieben zu werden, um ein Bild darstellende Bilddaten über das mobile Kommunikationsnetzwerk zu übertragen.

## Revendications

1. Procédé de production, dans un terminal (10, 25, 30, 40, 50), d'une image devant être transmise sous la forme de données d'image, dans lequel
- un champ d'image (17, 20), comprenant une représentation d'un utilisateur (5) du terminal (10, 25, 30, 40, 50), est enregistré et une image (16, 20), prévue pour une autre transmission sous la forme de données d'image, est produite à partir du champ d'image enregistré (17, 20) en réponse à l'enregistrement,
**caractérisé en ce que**
- une figuration (19, 21) de l'utilisateur (5) est identifiée dans le champ d'image enregistré (17, 20),
- la position de la figuration (19, 21) dans le champ d'image (17, 20) est déterminée sur la base de la figuration identifiée (19, 21) de l'utilisateur (5), et
- sur la base de la position déterminée, des données d'ajustement (33A, 33B, 33C, 33D, 34) sont produites pour délimiter la figuration (19, 21) de l'utilisateur (5) dans l'image (16, 20) à transmettre sous la forme de données d'image.

2. Procédé selon la revendication 1, **caractérisé en ce que**
- le champ d'image enregistré (17, 20) est mémorisé dans une mémoire d'image (64),
- sur la base des données d'ajustement produites (33A, 33B, 33C, 33D, 34), une section (62) comprenant la figuration (19, 21) de l'utilisateur (5) du terminal (10, 25, 30, 40, 50) est délimitée à partir de la mémoire d'image (64),
- les données incluses dans la section (62) de la mémoire d'image délimitée (64) sont transférées vers un convertisseur vidéo (65) pour produire l'image (16, 20) à transmettre sous la forme de données d'image.

3. Procédé selon la revendication 1, **caractérisé en ce que**
- lesdites données d'ajustement (33A, 33B, 33C, 33D, 34) sont transmises à l'utilisateur (5) du terminal (10, 25, 30, 40, 50) au moyen de caractères d'indication (33A, 33B, 33C, 33D, 34) destinés à commander l'orientation de l'appareil de prise de vues et à indiquer la position correcte.

4. Terminal (10, 25, 30, 40, 50), lequel comprend
- un appareil de prise de vues (11, 26, 32, 41, 50) pour enregistrer un champ d'image (17, 20) comprenant une représentation de l'utilisateur (5) du terminal (10, 25, 30, 40, 50) et destiné à former des données d'image représentant le champ d'image enregistré,
- un moyen de codage (62, 63, 64, 65) destiné à coder les données d'image reçues à partir de l'appareil de prise de vues (11, 26, 32, 41, 50), et
- un moyen de transmission (66) destiné à transmettre (66) les données d'image codées vers un récepteur,
**caractérisé en ce que**
- en outre, il comprend un moyen de reconnaissance de forme (18, 43, 61, 62, 63, 64) destiné à identifier la figuration (19, 21) de l'utilisateur (5) du terminal (10, 25, 30, 40, 50) et à déterminer la position dans le champ d'image enregistré (17, 20); et
- un moyen de production de données d'ajustement (18, 61, 62, 63, 64) destiné à produire des données d'ajustement (33A, 33B, 33C, 33D, 34) afin de délimiter la figuration (19, 21) de l'utilisateur (5) dans l'image (16, 20) représentée par les données d'image à transmettre sur la base de la position déterminée.

5. Terminal (10, 25, 30, 40, 50) selon la revendication 4, **caractérisé en ce qu'**il comprend
- la mémoire d'image (64) destinée à mémoriser les données d'image incluses dans le champ d'image enregistré (17, 20),
- un moyen de délimitation d'image (18, 61, 63) destiné à délimiter la section (62) de la mémoire d'image (64) contenant la figuration (19, 21) de l'utilisateur (5) du terminal (10, 25, 30, 40, 50) sur la base des données d'ajustement produites (33A, 33B, 33C, 33D, 34),
- un moyen (63) destiné à transférer les données, comprises dans la section délimitée (62) de la mémoire d'image (64), vers le convertisseur vidéo (65) de manière à produire l'image (16, 20) à transmettre sous la forme de données d'image.

6. Terminal (10, 25, 30, 40, 50) selon la revendication 4, **caractérisé en ce qu'**il comprend
- un moyen (33A, 33B, 33C, 33D, 34) destiné à transmettre les données d'ajustement (33A, 33B, 33C, 33D, 34) à l'utilisateur (5) du terminal (10, 25, 30, 40, 50) pour mettre au point le terminal (10, 25, 30, 40, 50).

7. Terminal (10, 25, 30, 40, 50) selon la revendication 4, **caractérisé en ce que** ledit moyen de reconnaissance de forme (18, 43, 61, 62, 63, 64) comprend un thermographe (43).

8. Terminal (10, 25, 30, 40, 50) selon la revendication 4, **caractérisé en ce qu'**il comprend un moyen de mise au point d'appareil de prise de vues (68) destiné à mettre au point l'appareil de prise de vues sur l'utilisateur (5) du terminal (10, 25, 30, 40, 50) sur la base desdites données d'ajustement (33A, 33B, 33C, 33D, 34).

9. Terminal (10, 25, 30, 40, 50) selon la revendication 4, **caractérisé en ce qu'**il comprend une station mobile (10, 25, 30, 40, 50), destinée à fonctionner dans un réseau de communication mobile, pour transmettre des données d'image représentant une image par l'intermédiaire du réseau de communication mobile.
